# EUROPÄISCHE PATENTSCHRIFT

(11) **EP 3 657 566 B1**
(45) Veröffentlichungstag und Bekanntmachung des Hinweises auf die Patenterteilung: **14.09.2022**
(21) Anmeldenummer: 19207808.7
(22) Anmeldetag: 07.11.2019
(51) Int. Cl.: H01M 50/10, H01M 50/502, H01M 50/543

(54) **STECKERVORRICHTUNG FÜR EINE BATTERIE, BATTERIE UND KRAFTFAHRZEUG**
PLUG DEVICE FOR BATTERY, BATTERY AND MOTOR VEHICLE
CONNECTEUR POUR BATTERIE, BATTERIE ET VÉHICULE AUTOMOBILE

(30) Priorität: 23.11.2018 DE 102018220184
(43) Veröffentlichungstag der Anmeldung: 27.05.2020
(73) Patentinhaber: Volkswagen AG, 38440 Wolfsburg (DE)
(72) Erfinder: MANAVBASI, Mahmut, 38226 Salzgitter (DE)
(74) Vertreter: FDST Patentanwälte

(56) Entgegenhaltungen:
- EP-A1- 2 849 259
- WO-A1-2016/124298
- DE-A1-102016 014 766

## Beschreibung

Die Erfindung betrifft eine Steckervorrichtung für eine ein Batteriegehäuse aufweisende Batterie. Des Weiteren betrifft die Erfindung eine Batterie mit einer solchen Steckervorrichtung, sowie ein elektrisch angetriebenes Kraftfahrzeug.

Ein elektrisch angetriebenes Kraftfahrzeug weist typischerweise eine Batterie (Traktions-Batterie) auf, welche einen Elektromotor zum Antrieb des Kraftfahrzeugs mit Energie versorgt. Dabei ist unter einem elektrisch angetriebenen Kraftfahrzeug insbesondere ein Elektrofahrzeug, welches die zum Antrieb notwendige Energie lediglich in der Batterie speichert (BEV, battery electric vehicle), ein Elektrofahrzeug mit einem Reichweitenverlängerer (REEV, range extended electric vehicle), ein Hybridfahrzeug (HEV, hybrid electric vehicle) und/oder ein Plug-In-Hybridfahrzeug (PHEV, plug-in hybrid electric vehicle) zu verstehen.

Eine solche Batterie weist typischerweise eine Anzahl an Batteriemodulen auf, welche beispielsweise in Serie oder parallel zueinander geschaltet sind. An Batterieanschlüssen der derart verschalteten Batteriemodule ist eine Spannung bzw. ein Strom zum Betrieb von Verbrauchern bereitgestellt. Solche Verbraucher sind insbesondere ein Traktionsnetz zum Antrieb des Kraftfahrzeugs oder ein Nebenverbraucher, wie beispielsweise einem Klimakompressor.

Die Batteriemodule sind dabei zu deren Schutz, insbesondere vor einer Witterung und/oder vor einer Beschädigung, in ein Batteriegehäuse eingebracht. Hierbei sind separate Steckeranschlüsse am Batteriegehäuse vorgesehen, an welchen beispielsweise die jeweiligen gehäuseaußenseitig angeordneten Verbraucher, eine Ladevorrichtung zur Zuführung einer Ladespannung bzw. eines Ladestroms zum Laden der Batterie, angeschlossen werden, um eine elektrische Verbindung mit den Batterieanschlüssen herzustellen. Des Weiteren ist beispielsweise ein Steckeranschluss für eine Druckausgleichsvorrichtung am Batteriegehäuse angeordnet.

Aus der DE 10 2016 014 766 A1 ist eine Hochvolt-Batterie mit zumindest einem Zellblock, welcher zumindest eine Strom- und/oder Steuerungsleitung aufweist, und mit zumindest einem Batteriegehäuse bekannt, welches zumindest einen Durchbruch aufweist, durch welchen die zumindest eine Strom- und/oder Steuerungsleitung geführt ist. Dabei weist die zumindest eine Strom- und/oder Steuerungsleitung zumindest in einem Bereich des Durchbruchs eine Isolation auf, welche durch ein Umspritzen mit Kunststoff hergestellt ist und außerhalb des Batteriegehäuses eine Steckbuchse für einen Kabelstecker ausbildet.

In der WO 2016/124298 A1 ist ein Gehäuse zum Aufnehmen einer internen elektrischen Einrichtung einer Traktionsbatterie für ein elektrisch betreibbares Fahrzeug beschrieben. An dessen haubenartigen Gehäuseelement sind externe Verbindungselemente angeordnet, welche jeweils in einem Durchbruch des Gehäuseelements eingesetzt sind.

Der Erfindung liegt die Aufgabe zugrunde, eine besonders geeignete Steckervorrichtung anzugeben. Insbesondere soll dabei eine Montage der Steckeranschlüsse am Batteriegehäuse möglichst einfach sein, und/oder das Batteriegehäuse soll zuverlässig flüssigkeits- und/oder gasdicht abgedichtet sein. Des Weiteren sollen eine Batterie mit einer solchen Steckervorrichtung, sowie ein Kraftfahrzeug mit einer solchen Batterie angegeben werden.

Bezüglich der Steckervorrichtung wird die Aufgabe erfindungsgemäß gelöst durch die Merkmale des Anspruchs 1. Hinsichtlich der Batterie wird die Aufgabe durch die Merkmale des Anspruchs 9 und bezüglich des Kraftfahrzeugs durch die Merkmale des Anspruchs 10 erfindungsgemäß gelöst. Vorteilhafte Ausgestaltungen und Weiterbildungen sind Gegenstand der Unteransprüche. Dabei gelten die Ausführungen im Zusammenhang mit der Steckervorrichtung sinngemäß auch für die Batterie sowie für das Kraftfahrzeug und umgekehrt.

Die Steckervorrichtung ist für eine Batterie, insbesondere eines elektrisch angetriebenen Kraftfahrzeugs, sowie zur Montage an einem Batteriegehäuse der Batterie vorgesehen und geeignet. Die Steckervorrichtung weist einen Anschlussgrundkörper mit mindestens zwei angeformten Steckkonturen auf. Dabei ist der Anschlussgrundkörper vorzugsweise leistenartig ausgebildet. Die Steckkonturen sind jeweils zur Aufnahme einer Steckergegenkontur eines Steckerelements vorgesehen.

Die Steckkonturen sind dabei zweckmäßigerweise jeweils als ein Kragen ausgebildet, welcher im Montagezustand der Steckervorrichtung am Batteriegehäuse batteriegehäuseaußenseitig zum Anschlussgrundkörper emporsteht. Dabei sind die Steckkonturen aufgrund des Anformens am Anschlussgrundkörper monolithisch, also einteilig und zusammenhängend mit diesem verbunden. Beispielsweise zusätzlich weist die Steckkontur, insbesondere der Kragen, Kodierkonturen zur eindeutigen Zuordnung des jeweiligen Steckerelements, Führungen, Halteelemente, und/oder Clips-oder Rastelemente für die Steckergegenkontur des jeweils zugeordneten Steckerelements auf.

Die Steckervorrichtung weist des Weiteren eine Anzahl von in den Anschlussgrundkörper aufgenommenen Stromschienen auf, wobei die Stromschienen jeweils mindestens zwei Anschlusskontakte aufweisen. Von diesen ist jeweils einer der Anschlusskontakte zur gehäuseinternen elektrischen Verbindung mit einem Batterieanschluss vorgesehen. Der jeweils andere Anschlusskontakt sitzt in einer der Steckkonturen zur gehäuseaußenseitigen (elektrischen) Steckkontaktierung mit dem zugeordneten Steckerelement ein.

Den Vorrichtungen entsprechend, mit welchen die den Steckkontakten zugeordneten Steckerelemente jeweils gekoppelt sind, soll gegebenenfalls eine elektrische Verbindung mit dem jeweiligen Batterieanschluss hergestellt werden. Für solche Steckerelemente sitzt zweckmäßigerweise der jeweilige Anschlusskontakt in der zugeordneten Steckkontur ein. Insbesondere ist eine solche Vorrichtung ein Hochvoltverbraucher, welcher eine Betriebsspannung größer oder gleich 60V verwendet, wie beispielsweise ein Traktionsnetz, oder ein (Hochvolt)Nebenverbraucher wie beispielsweise ein Klimakompressor. Alternativ ist eine solche Vorrichtung eine Ladevorrichtung zum Laden der Batterie.

Entsprechend ist für Vorrichtung, welche nicht elektrisch mit dem Batterieanschluss verbunden werden sollen, kein Anschlusskontakt in der jeweiligen Stecckontur vorgesehen. Insbesondere sind solche Vorrichtungen eine Druckausgleichsvorrichtung, ein Niedervoltverbraucher wie beispielsweise ein Steuergerät, ein Sensor wie beispielsweise ein Temperatursensor, oder eine Kühlmittelzufuhr oder eine Kühlmittelabfuhr.

Zusammenfassend ist ein Steckeranschluss für das zugeordnete Steckerelement mittels der Steckkontur und gegebenenfalls zusätzlich mittels des jeweiligen Anschlusskontaktes gebildet.

Die Steckervorrichtung weist weiterhin ein Dichtungselement zur flüssigkeits- und gasdichten Abdichtung des Anschlussgrundkörpers am Batteriegehäuse auf. Das Dichtungselement ist dabei vorzugsweise zumindest an derjenigen Seite des Anschlussgrundkörpers angeordnet, welche der die Steckkonturen aufweisenden Seite abgewandt ist, so dass das Dichtungselement im Montagezustand dem Batteriegehäuse zugewandt ist.

Vorzugsweise wird der Anschlussgrundkörper mit den Steckkonturen durch ein Spritzgießverfahren hergestellt. Das Dichtungselement ist insbesondere ein Einlegeteil beim Spritzgießen des Anschlussgrundkörpers. Alternativ sind das Dichtungselement und der Anschlussgrundkörper in einem Zwei-Komponenten-Spritzgießverfahren hergestellt. Weiter alternativ ist das Dichtungselement an den Anschlussgrundkörper angebracht, beispielsweise angeklebt. Allenfalls ist das Dichtungselement zur flüssigkeits- und gasdichten, insbesondere auch staubdichten, Abdichtung des Anschlussgrundkörpers am Batteriegehäuse geeignet.

Vorteilhafterweise sind aufgrund des Anformens der mindestens zwei Steckkonturen an den Anschlussgrundkörper sowie der Aufnahme der Anzahl der Stromschienen in den Anschlussgrundkörper mehrere, also mindestens zwei, Steckeranschlüsse in einen einzigen Anschlussgrundkörper integriert. Folglich ist lediglich dieser einzige Anschlussgrundkörper am Batteriegehäuse zu montieren, weshalb ein Montageaufwand im Vergleich zur eingangs erwähnten separaten Montage der Steckeranschlüsse für die jeweiligen Vorrichtungen vorteilhaft verringert ist.

Bei der eingangs erwähnten separaten Ausgestaltung der Steckeranschlüsse sind diese beispielsweise aufgrund von jeweiligen Befestigungselementen und/oder aufgrund eines Mindestabstands zwischen Aufnahmen des Batteriegehäuses für diese Befestigungselemente lediglich vergleichsweise weit zueinander beabstandet am Batteriegehäuse anordenbar. Insbesondere ist die Steckervorrichtung im Vergleich hierzu kompakter, so dass die Steckeranschlüsse bauraumsparend am Batteriegehäuse angeordnet sind. Ferner ist vorteilhaft lediglich ein einziges Dichtungselement für die Steckervorrichtung notwendig, sodass im Vergleich zur separaten Ausgestaltung der Steckeranschlüsse mit jeweils einem Dichtungselement, eine besonders zuverlässige und/oder einfache Abdichtung realisiert ist.

Gemäß einer geeigneten Ausgestaltung ist die Anzahl der Stromschienen mindestens zwei, wobei zwei dieser Stromschienen im Folgenden als erste Stromschiene und als zweite Stromschiene bezeichnet werden. Hierbei sitzen ein erster Anschlusskontakt der ersten Stromschiene und ein erster Anschlusskontakt der zweiten Stromschiene in einer gemeinsamen ersten Steckkontur der mindestens zwei Steckkonturen ein. Der mittels der ersten Steckkontur, dem ersten Anschlusskontakt der ersten Stromschiene und dem ersten Anschlusskontakt der zweiten Stromschiene gebildete erste Steckeranschluss ist insbesondere für ein Steckerelement der Batterieladevorrichtung oder des Traktionsnetzes ausgebildet. Dabei ist ein zweiter Anschlusskontakt der ersten Stromschiene zum Anschluss an einen, insbesondere als Massenanschluss ausgebildeten ersten Batterieanschluss vorgesehen. Ein zweiter Anschlusskontakt der zweiten Stromschiene ist zum Anschluss an einen, insbesondere als Phasenanschluss ausgebildeten, zweiten Batterieanschluss vorgesehen.

Beispielsweise weisen die zweiten Anschlusskontakte eine Ösenform zur Schraubverbindung mit einem an den jeweiligen Batterieanschluss angeschlossenen elektrischen Leiter auf.

Vorzugsweise weist die Steckervorrichtung zumindest einen weiteren solchen Steckeranschluss auf, in deren Steckkontur in analoger Weise zwei erste Anschlusskontakte weiterer zweier Stromschienen einsitzen.

Gemäß einer vorteilhaften Ausgestaltung sitzen ein erster Anschlusskontakt einer dritten Stromschiene sowie ein dritter Anschlusskontakt der ersten Stromschiene in einer gemeinsamen zweiten Steckkontur der mindestens zwei Steckkonturen ein. Der mittels der zweiten Steckkontur, dem dritten Anschlusskontakt der ersten Stromschiene und dem ersten Anschlusskontakt der dritten Stromschiene gebildete zweite Steckeranschluss ist beispielsweise für ein Steckerelement des Nebenverbrauchers ausgebildet. Dabei ist der zweite Anschlusskontakt der dritten Stromschiene zum Anschluss an den insbesondere als Phasenanschluss ausgebildeten zweiten Batterieanschluss vorgesehen.

Zwischen den Batterieanschlüssen und dem jeweiligen zweiten Anschlusskontakt sind beispielweise weitere Einrichtungen, wie insbesondere eine Sicherung, ein Steuergerät, und/oder ein Spannungswandler geschaltet.

Zusammenfassend sitzen der erste und der dritte Anschlusskontakt der ersten Stromschiene in der ersten Steckkontur bzw. in der zweiten Steckkontur ein, wobei diese Anschlusskontakte mittels des zweiten Anschlusskontaktes der ersten Stromschiene gemeinsam an den ersten Batterieanschluss anschließbar sind. Hierbei ist vorzugsweise der erste Steckeranschluss für das Steckerelement des Traktionsnetzes eingerichtet.

Gemäß einer vorteilhaften Weiterbildung weist die Steckervorrichtung eine dritte Steckkontur auf, welche als ein Bajonettanschluss ausgebildet ist. Der mittels der dritten Steckkontur gebildete Steckeranschluss ist insbesondere für die Druckausgleichsvorrichtung vorgesehen. Zweckmäßigerweise weist der Bajonettanschluss einen Kragen auf, welcher umfangsseitig einer Durchgangsöffnung für ein Gas angeordnet ist.

Gemäß einer vorteilhaften Weiterbildung weist die Steckervorrichtung eine vierte Steckkontur auf, welche insbesondere für Niedervoltverbraucher, also für Verbraucher, welche Betriebsspannung 12V, 24V, 36V oder 48V verwenden, ausgebildet ist. Dabei ist die vierte Steckkontur zur beidseitigen Aufnahme von Steckerelementen ausgebildet. Mit anderen Worten ist die vierte Steckkontur dazu eingerichtet im Montagezustand sowohl ein Steckerelement batteriegehäuseinnenseitig, als auch ein zu diesem Steckerelement korrespondierendes weiteres Steckerelement batteriegehäuseaußenseitig aufzunehmen, welche im aufgenommenen Zustand miteinander steckkontaktiert sind. Hierzu ist die vierte Steckkontur insbesondere als ein Kragen ausgebildet, welcher umfangsseitig einer die jeweiligen Seiten des Anschlussgrundkörpers verbindenden Verbindungsöffnung des Anschlussgrundkörpers angeordnet ist. Die vierte Steckkontur weist beispielsweise Rast- oder Clipselemente zur sicheren Halterung der beiden Steckerelemente auf. Beispielsweise werden auf diese Weise ein batteriegehäuseaußenseitig angeordnetes Motorsteuergerät sowie ein batteriegehäuseinnenseitig angeordnetes Batteriesteuergerät miteinander verbunden.

Gemäß einer vorteilhaften Weiterbildung sind diejenigen Stromschienen, welche zum Anschluss an den insbesondere als Masseanschluss ausgebildeten ersten Batterieanschluss vorgesehen, zu einer ersten Schienengruppe gefügt und gegeneinander elektrisch isoliert. Vorzugsweise werden diese Stromschienen hierzu im Zuge der Herstellung der Steckervorrichtung unter Bildung der ersten Schienengruppe umspritzt. In analoger Weise werden diejenigen Stromschienen, welche zum Anschluss an den insbesondere als Phasenanschluss ausgebildeten zweiten Batterieanschluss vorgesehen sind, zu einer zweiten Schienengruppe gefügt und gegeneinander elektrisch isoliert. Vorzugsweise werden diese Stromschiene hierzu ebenfalls umspritzt. Vorteilhaft ist aufgrund dessen eine separate Isolierung der einzelnen Stromschienen nicht notwendig.

Im Zuge der Herstellung der Steckervorrichtung werden die erste, insbesondere umspritzte, Schienengruppe und die zweite, insbesondere umspritzte, Schienengruppe aneinander angeordnet. Dabei sind die erste Schienengruppe und die zweite Schienengruppe aufgrund deren Umspritzung gegeneinander elektrisch isoliert. In einem weiteren Schritt bei der Herstellung der Steckervorrichtung werden die aneinander angeordneten Schienengruppen unter Bildung des Anschlussgrundkörpers und der Steckkontakte umspritzt.

Die erste Schienengruppe und die zweite Schienengruppe sind also vor deren Umspritzung als zueinander separate (Module) Teile ausgebildet. Auf diese Weise ist die Form jeder der Schienengruppen unabhängig von der Form der jeweils anderen Schienengruppe an eine Position der Batterieanschlüsse anpassbar und zweckmäßigerweise auch angepasst. Für Batteriemodelle, welche sich in der Anordnung deren Batterieanschlüsse zueinander unterscheiden, ist auf diese Weise eine identische Anordnung der Steckkonturen ermöglicht.

Gemäß einer vorteilhaften Weiterbildung sind alle Stromschienen formschlüssig und/oder stoffschlüssig im Anschlussgrundkörper aufgenommen. Insbesondere werden die Stromschienen hierzu unter Bildung des Anschlussgrundkörpers inklusive der Steckkonturen umspritzt. Vorzugsweise werden die Stromschienen wie oben dargestellt zunächst zu einer ersten Schienengruppe und der zu dieser separaten zweiten Schienengruppe gruppiert und anschließend umspritzt. Alternativ hierzu werden die Stromschienen direkt unter Bildung des Anschlussgrundkörpers umspritzt.

Gemäß einer zweckmäßigen Ausgestaltung ist zumindest eine der Steckkonturen, vorzugsweise diejenige Steckkontur bzw. diejenigen Steckkonturen für das Traktionsnetz bzw. für die Ladevorrichtung, gegen eine Normale derjenigen Fläche geneigt, an welche die Steckkontur angeformt ist. Zweckmäßigerweise sind dabei die jeweiligen Anschlusskontakte der Stromschienen ebenfalls entsprechend geneigt. Beispielsweise beträgt der Winkel der Neigung gegen die Normale zwischen 10° und 20°. Somit ist eine Einsteckrichtung des Steckerelements in den entsprechenden Steckeranschluss ebenfalls um diesen Winkel geneigt. Infolge dessen ist ein Anschluss von Steckerelementen auch bei vergleichsweise wenig zum Anschluss zur Verfügung stehendem (Bau-)Raum, beispielsweise aufgrund von im Bereich der Steckervorrichtung verlaufenden Karosserieteilen, erleichtert.

Gemäß einer vorteilhaften Weiterbildung weist eine Batterie, ein Batteriegehäuse sowie eine nach einer der oben dargestellten Varianten ausgebildete Steckervorrichtung auf. Die Steckeranschlüsse sind erst bei angestecktem Steckerelement und/oder bei Verwendung eines entsprechenden Verschlusses, beispielsweise einer Kappe, flüssigkeits- und gasdicht. Derjenige Bereich jedoch, in welchem der Anschlussgrundkörper am Batteriegehäuse angeordnet, insbesondere befestigt, ist, ist mittels des Dichtungselements flüssigkeits- und gasdicht abgedichtet.

Gemäß einer vorteilhaften Ausgestaltung weist ein Kraftfahrzeug eine Batterie in der oben dargestellten Variante auf.

Nachfolgend werden Ausführungsbeispiele der Erfindung anhand einer Zeichnung näher erläutert. Darin zeigen:
- Fig. 1: schematisch in einer Draufsicht ein Kraftfahrzeug mit einer Batterie, welche eine leistenartige Steckervorrichtung aufweist,
- Fig. 2a: in einer perspektivischen Ansicht in einer Draufsicht die Steckervorrichtung mit einem Anschlussgrundköper, an welchem fünf Steckkonturen angeformt sind, wobei in drei der Steckkonturen jeweils zwei Anschlusskontakte einsitzen, sowie Steckerelemente mit Steckergegenkonturen, wobei die Steckkonturen zur Aufnahme der Steckergegenkonturen vorgesehen sind,
- Fig. 2b: in einer Draufsicht die Steckervorrichtung,
- Fig. 3: in einer perspektivischen Explosionsdarstellung die Steckervorrichtung, wobei die Steckervorrichtung eine Anzahl an Stromschienen aufweist, welche im Anschlussgrundkörper aufgenommen sind, und welche die Anschlusskontakte aufweisen,
- Fig. 4a: in einer perspektivischen Ansicht eine erste Schienengruppe und eine zweite Schienengruppe, welche die zum Anschluss an einem ersten bzw. an einem zweiten Batterieanschluss vorgesehenen Stromschienen aufweist, und
- Fig. 4b: in einer perspektivischen Ansicht die erste Schienengruppe und die zweite Schienengruppe im Montagezustand.

Einander entsprechende Teile und Größen sind in allen Figuren stets mit gleichen Bezugszeichen versehen.

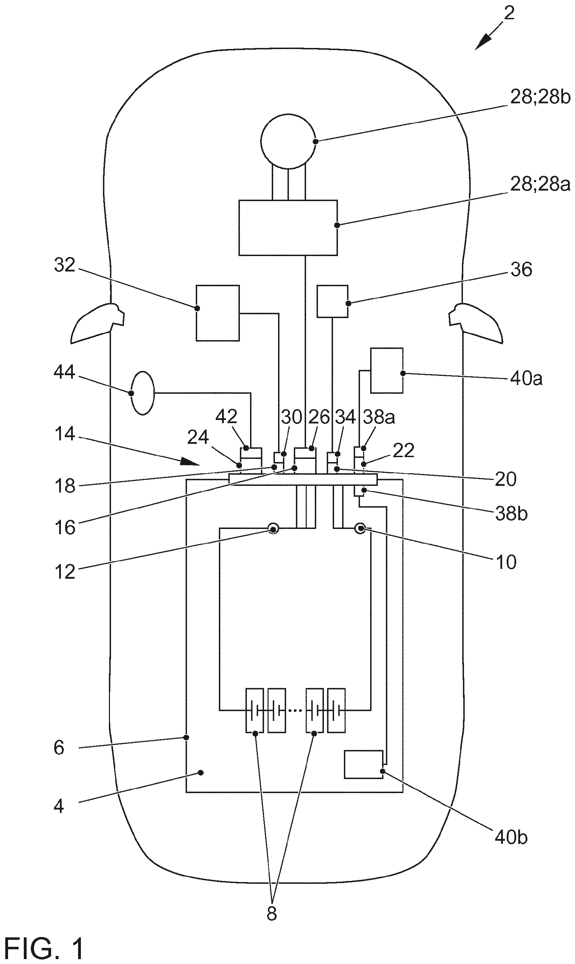

In Fig. 1 ist ein elektrisch angetriebenes Kraftfahrzeug 2 dargestellt. Dieses weist eine Batterie 4 auf, in dessen Batteriegehäuses 6 miteinander verschaltete Batteriemodule 8 aufgenommen sind, mittels welchen eine Spannung bzw. ein Strom an einem ersten Batterieanschluss 10, welcher als Massenanschluss ausgebildet ist, und an einem zweiten Batterieanschluss 12, welcher als Phasenanschluss ausgebildet ist, bereitgestellt wird. Die Batterie 4 weist des Weiteren eine Steckervorrichtung 14 auf, welche am Batteriegehäuse 6 montiert ist. Die Steckervorrichtung 14 bildet eine Schnittstelle zwischen gehäuseintern (gehäuseinnenseitig) angeordneten Vorrichtungen und gehäuseextern (gehäuseaußenseitig) angeordneten Vorrichtungen. Hierzu weist die Steckervorrichtung 14 fünf Steckeranschlüsse auf, nämlich einen ersten Steckeranschluss 16, einen zweiten Steckeranschluss 18, einen dritten Steckeranschluss 20, einen vierten Steckeranschluss 22 sowie einen fünften Steckeranschluss 24. Diese dienen zum Anschluss eines Steckerelements 26 eines Traktionsnetz 28 mit einem Wechselrichter 28a und mit einem Elektromotor 28b zum Antrieb des Kraftfahrzeugs 2, eines Steckerelements 30 eines als Klimakompressor ausgebildeten Nebenverbrauchers 32, eines Steckerelements 34 einer Druckausgleichsvorrichtung 36 zum ändern des Drucks innerhalb des Batteriegehäuses 6, zweier Steckerelemente 38a und 38b zweier Niedervoltverbraucher 40a bzw. 40b, welche als Motorsteuergerät bzw. als Batteriesteuergerät ausgebildet sind, bzw. eines Steckerelements 42 einer Ladevorrichtung 44 für die Batterie 4.

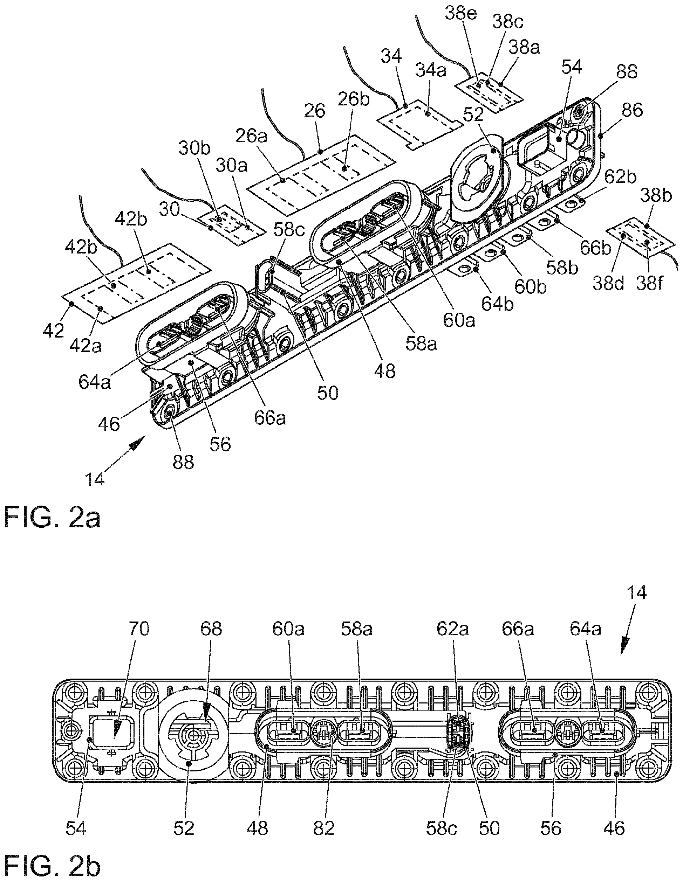

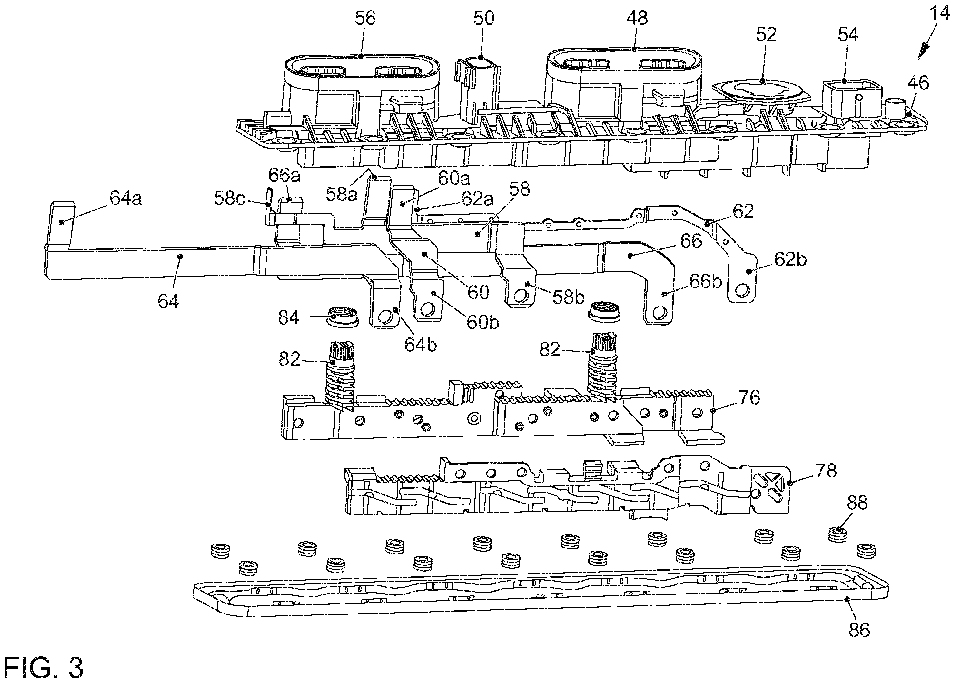

Die Steckervorrichtung 14 ist in den Figuren 2a bis 4b vergleichsweise detailliert dargestellt. Die Steckervorrichtung 14 weist einen Anschlussgrundkörper 46 auf. An eine Seite des Anschlussgrundkörpers 46, welche im Montagezustand der Steckervorrichtung 14 am Batteriegehäuse 6 gehäuseaußenseitig angeordnet ist, sind eine erste Steckkontur 48, eine zweite Steckkontur 50, eine dritte Steckkontur 52, eine vierte Steckkontur 54, sowie eine fünfte Steckkontur 56 angeformt. Diese Steckkonturen 48, 50, 52, 54, 56 dienen jeweils der Aufnahme einer korrespondierenden Steckergegenkontur 26a, 30a, 34a, 38c und 38d, bzw. 42a des jeweils zugeordneten Steckerelements 26, 30, 34, 38a und 38b, bzw. 42.

Die Steckervorrichtung 14 weist des Weiteren eine erste Stromschiene 58, eine zweite Stromschiene 60, eine dritte Stromschiene 62, eine vierte Stromschiene 64 sowie eine fünfte Stromschiene 66 auf.

Die erste Stromschiene 58 sowie die zweite Stromschiene 60 weisen jeweils einen ersten Anschlusskontakt 58a bzw. 60a auf, welcher zur gehäuseaußenseitigen (elektrischen) Steckkontaktierung mit dem Steckerelement 26 des Traktionsnetzes 28 in der ersten Steckkontur 48 einsetzt. Die erste Stromschiene 58 sowie die zweite Stromschiene 60 weisen zudem jeweils einen zweiten Anschlusskontakt 58b bzw. 60b auf, wobei der zweite Anschlusskontakt 58b der ersten Stromschiene 58 zum gehäuseinternen Anschluss an den ersten Batterieanschluss 10 vorgesehen und auch an diesem angeschlossen ist. Der zweite Anschlusskontakt 60b der zweiten Stromschiene 60 ist dabei zum gehäuseinternen Anschluss an den zweiten Batterieanschluss 12 vorgesehen und auch an diesem angeschlossen.

In der zweiten Steckkontur 50 sitzen sowohl ein erster Anschlusskontakt 62a einer dritten Stromschiene 62 als auch ein dritter Anschlusskontakt 58c der ersten Stromschiene 58 ein. Dabei ist ein zweiter Anschlusskontakt 62b der dritten Stromschiene 62 zum gehäuseinternen Anschluss an den zweiten Batterieanschluss vorgesehen und auch an diesem angeschlossen.

Zusammenfassend sitzen der erste Anschlusskontakt 58a und der dritte Anschlusskontakt 58c in der ersten Steckkontur 48 bzw. in der zweiten Steckkontur 50 ein. Mittels des zweiten Anschlusskontaktes 58b der ersten Stromschiene 58 sind dabei sowohl deren erster Anschlusskontakt 58a als auch deren dritter Anschlusskontakt 58c gemeinsam an den ersten Batterieanschluss 10 angeschlossen, sodass ein gemeinsames elektrisches Potenzial am ersten Anschlusskontakt 58a und am dritten Anschlusskontakt 58c anliegt.

Weiterhin sitzen in der fünften Steckkontur 56 zwei erste Anschlusskontakte 64a und 64b einer vierten Stromschiene 64 bzw. einer fünften Stromschiene 66 ein. Die vierte Stromschiene 64 sowie die fünfte Stromschiene 66 weisen dabei jeweils einen zweiten Anschlusskontakt 64b bzw. 66b auf, welche zum Anschluss an den ersten Batterieanschluss 10 bzw. zum Anschluss an den zweiten Batterieanschluss 12 vorgesehen und auch an diesem angeschlossen sind.

Auf diese Weise ist bei angeschlossenen Steckerelementen 26, 30, 42 mittels der Stromschienen 58, 60, 62, 64, 66 eine elektrische Verbindung zwischen den Batterieanschlüssen 10, 12 und elektrischen Kontakten 26b, 30b, 42b der Steckerelemente 26, 30 bzw. 42 realisiert.

Die dritte Steckkontur 52 ist als ein Bajonettanschluss ausgebildet, mit welchem das Steckerelement 34 der Druckausgleichsvorrichtung 36 koppelbar ist. Dabei umgibt die als Kragen ausgebildete Steckkontur 52 eine Durchgangsöffnung 68 für ein Gas.

Die vierte Steckkontur 54 ist als ein Kragen ausgebildet, welcher umfangsseitig einer Verbindungsöffnung 70 des Anschlussgrundkörpers 46 angeordnet ist, welche die im Montagezustand der Steckervorrichtung 14 am Batteriegehäuse 6 die Gehäuseinnenseite mit der Gehäuseaußenseite verbindet. In die vierte Steckkontur 54 sind sowohl das Steckerelement 38b batteriegehäuseinnenseitig, als auch das zu diesem korrespondierende Steckerelement 38a batteriegehäuseaußenseitig aufnehmbar. Infolge dessen sind die beiden Steckerelemente 38a, 38b im aufgenommenen Zustand miteinander steckkontaktiert. So sind elektrische Kontakte 38e, 38f der Steckerelemente 38a bzw. 38b miteinander elektrisch verbunden.

Zusammenfassend bilden die erste Steckkontur 48 und die darin einsitzenden Anschlusskontakte 58a, 60a den ersten Steckeranschluss 16, die zweite Steckkontur 50 und die darin einsitzenden Anschlusskontakte 58c, 62a den zweiten Steckeranschluss 18, die fünfte Steckkontur 56 mit den darin einsitzenden Anschlusskontakten 64a, 66a den fünften Steckeranschluss 24, die dritte Steckkontur 52 den dritten Steckeranschluss 20, und die vierte Steckkontur 54 den vierten Steckeranschluss 22.

Wie insbesondere in der Fig. 2b erkennbar ist, sind der erste Steckeranschluss 16 und der fünfte Steckeranschluss 24 gegen eine Normale derjenigen Seite des Anschlussgrundkörpers 46 geneigt, zu welcher die jeweilige Steckkontur 48 bzw. 56 emporsteht und an welcher diese angeformt sind.

Die Stromschienen 58, 60, 62, 64, 66 sind im Wesentlichen Z-förmig ausgebildet und derart angeordnet, dass die Anschlusskontakte 58a, 58b, 58c, 60a, 60b, 62a, 62b, 64a, 64b, 66a, 66b im Wesentlichen parallel zueinander verlaufen. Der die ersten Anschlusskontakte 58a, 60a, 62a, 64a, 66a, und bei der ersten Stromschiene 58 zusätzlich den dritten Anschlusskontakt 58c, mit den zweiten Anschlusskontakten 58b, 60b, 62b, 64b, 66b verbindende Abschnitt der jeweiligen Stromschiene 58, 60, 62, 64, bzw. 66 wird im Folgenden als Verbindungsabschnitt bezeichnet

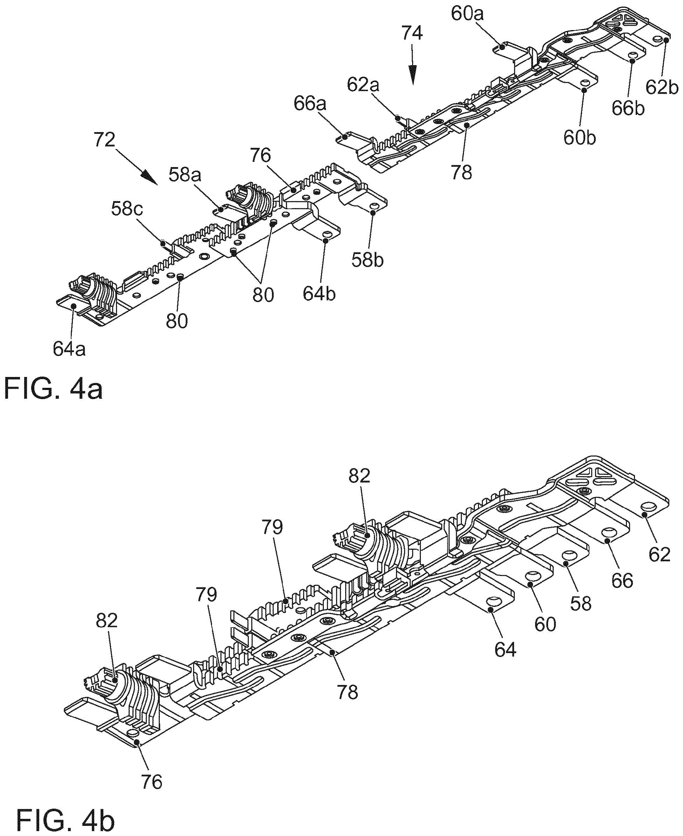

In den Figuren 4a und 4b sind eine erste Schienengruppe 72 und eine zweite Schienengruppe 74 dargestellt. Die erste Schienengruppe 72 umfasst dabei diejenigen Stromschienen 58, 64, welche im Montagezustand mit dem ersten Batterieanschluss 10 elektrisch verbunden sind. Die zweite Schienengruppe 74 umfasst entsprechend diejenigen Stromschienen 60, 62, 66, welche im Montagezustand mit dem zweiten Batterieanschluss 12 elektrisch verbunden sind. Die Schienengruppen 72, 74 weisen jeweils ein durch Umspritzen der jeweiligen Stromschienen im Bereich derer Verbindungsabschnitte gebildetes Kunststoffelement 76 bzw. 78 auf, mittels welchem die Stromschienen 58, 64 bzw. 60, 62, 66 der jeweiligen Schienengruppe 72 bzw. 74 gegeneinander elektrisch isoliert und miteinander gefügt sind.

Die beiden Kunststoffteile 76 und 78, weisen dabei an deren den ersten Anschlusskontakten 58a, 60a, 62a, 64a, 66a zugewandten Seite jeweils eine Anzahl von Rippen 79 zur Erhöhung der (Biege-)Steifigkeit der Schienengruppe 72 bzw. 74 auf. Des Weiteren ist am Kunststoffteil 76 der ersten Schienengruppe 72 eine als Zapfen ausgebildete Fügekontur 80 angeformt, welche in einer zu dieser der korrespondierenden, nicht weiter dargestellten Aufnahmekontur des Kunststoffteils 78 der zweiten Schienengruppe 74 aufnimmt, so dass die beiden Kunststoffteile 76 und 78 formschlüssig miteinander gefügt sind.

Am Kunststoffteil 76 der ersten Schienengruppe 72 sind zudem zwei parallel zu den ersten Anschlusskontakten 64a, 58a verlaufende Zapfen 82 angeformt, welche in der ersten Steckkontur 48 bzw. in der fünften Steckkontur 56 einsitzen und jeweils mit einem Dichtring 84 versehen sind.

Die beiden Schienengruppen 72 und74 sind form- und stoffschlüssig im Anschlussgrundkörper 46 aufgenommen. Hierzu wurden die beiden Schienengruppen 72 und74 im Zuge der Herstellung der Steckervorrichtung 14 unter Bildung des Anschlussgrundkörpers 46 umspritzt.

Die Steckervorrichtung 14 weist ein als Einlegeteil für das Umspritzen der beiden Schienengruppen 72 und 74 ausgebildetes Dichtungselement 86 auf. Mittels diesem ist ein (Auflage-) Bereich, in welchem der Anschlussgrundkörper 46 am Batteriegehäuse 6 befestigt ist, flüssigkeits- und gasdicht abgedichtet. Mit anderen Worten ist eine flüssigkeits- und gasdichte Abdichtung des Anschlussgrundkörpers 46 am Batteriegehäuse 6 realisiert. Das Dichtungselement 86 ist somit zwischen dem Anschlussgrundkörper 46 und dem Batteriegehäuse 6 angeordnet.

Weiterhin ist eine Anzahl an (Schraub-)Buchsen 88 in den Anschlussgrundkörper 46 eingebracht, mittels welchen dieser am Batteriegehäuse 6 schraubmontierbar ist.

Die Erfindung ist nicht auf das vorstehend beschriebene Ausführungsbeispiel beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Kraftfahrzeug
- 4: Batterie
- 6: Batteriegehäuse
- 8: Batteriemodul
- 10: Masseanschluss/erster Batterieanschluss
- 12: Phasenanschluss/zweiter Batterieanschluss
- 14: Steckervorrichtung
- 16: erster Steckeranschluss
- 18: zweiter Steckeranschluss
- 20: dritter Steckeranschluss
- 22: vierter Steckeranschluss
- 24: fünfter Steckeranschluss
- 26: Steckerelement des Traktionsnetzes
- 26a: Steckergegenkontur
- 26b: elektrischer Kontakt
- 28: Traktionsnetz
- 28a: Wechselrichter
- 28b: Elektromotor
- 30: Steckerelement des Nebenverbraucher
- 30a: Steckergegenkontur
- 30b: elektrischer Kontakt
- 32: Nebenverbraucher/Klimakompressor
- 34: Steckerelement der Druckausgleichsvorrichtung
- 34a: Steckergegenkontur
- 36: Druckausgleichsvorrichtung
- 38a: Steckerelement des Motorsteuergeräts
- 38b: Steckerelement des Batteriesteuergeräts
- 38c: Steckergegenkontur
- 38d: Steckergegenkontur
- 38e: elektrischer Kontakt
- 38f: elektrischer Kontakt
- 40a: N iedervoltverbraucher/Motorsteuergerät
- 40b: N iedervoltverbraucher/Batteriesteuergerät
- 42: Steckerelement der Ladevorrichtung
- 42a: Steckergegenkontur
- 42b: elektrischer Kontakt
- 44: Ladevorrichtung
- 46: Anschlussgrundkörper
- 48: erste Steckkontur
- 50: zweite Steckkontur
- 52: dritte Steckkontur
- 54: vierte Steckkontur
- 56: fünfte Steckkontur
- 58: erste Stromschiene
- 58a: erster Anschlusskontakt der ersten Stromschiene
- 58b: zweiter Anschlusskontakt der ersten Stromschiene
- 58c: dritter Anschlusskontakt der ersten Stromschiene
- 60: zweite Stromschiene
- 60a: erster Anschlusskontakt der zweiten Stromschiene
- 60b: zweiter Anschlusskontakt der zweiten Stromschiene
- 62: dritte Stromschiene
- 62a: erster Anschlusskontakt der dritten Stromschiene
- 62b: zweiter Anschlusskontakt der dritten Stromschiene
- 64: vierte Stromschiene
- 64a: erster Anschlusskontakt der vierten Stromschiene
- 64b: zweiter Anschlusskontakt der vierten Stromschiene
- 66: fünfte Stromschiene
- 66a: erster Anschlusskontakt der fünften Stromschiene
- 66b: zweiter Anschlusskontakt der fünften Stromschiene
- 68: Durchgangsöffnung
- 70: Verbindungsöffnung
- 72: erste Schienengruppe
- 74: zweite Schienengruppe
- 76: Kunststoffelement
- 78: Kunststoffelement
- 79: Rippe
- 80: Fügekontur
- 82: Zapfen
- 84: Dichtring
- 86: Dichtungselement
- 88: Buchse

## Patentansprüche

1. Steckervorrichtung (14) zur Montage an einem Batteriegehäuse (6) einer Batterie (4) eines elektrisch angetriebenen Kraftfahrzeugs (2),
- mit einem Anschlussgrundkörper (46) mit mindestens zwei angeformten Steckkonturen (48, 50, 52, 54, 56), welche jeweils zur Aufnahme einer Steckergegenkontur (26a, 30a, 34a, 38c, 38d, 42a) eines jeweils zugeordneten Steckerelements (26, 30, 34, 38a, 38b, 42) vorgesehen sind,
- mit einer Anzahl von in den Anschlussgrundkörper (46) aufgenommen Stromschienen (58, 60, 62, 64, 66), die jeweils mindestens zwei Anschlusskontakte (58a, 58b, 58c, 60a, 60b, 62a, 62b, 64a, 64b, 66a, 66b) aufweisen, von den jeweils ein Anschlusskontakt (58b, 60b, 62b, 64b, 66b) zur gehäuseinternen elektrischen Verbindung mit einem Batterieanschluss (10, 12) vorgesehen ist, und der jeweils andere Anschlusskontakt (58a, 58c, 60a, 62a, 64a, 66a) in einer der Steckkonturen (48, 50, 52, 54, 56) zur gehäuseaußenseitigen Steckkontaktierung mit dem zugeordneten Steckerelement (26, 30, 34, 38a, 38b, 42) eines Hochvoltverbrauchers (28), eines Hochvoltnebenverbrauchers (32) oder einer Ladevorrichtung (44) für die Batterie (4) einsitzt, und
- mit einem Dichtungselement (86) zur flüssigkeits- und gasdichten Abdichtung des Anschlussgrundkörpers (46) am Batteriegehäuse (6).

2. Steckervorrichtung (14) nach Anspruch 1,
**dadurch gekennzeichnet,**
**dass** ein erster Anschlusskontakt (58a) einer ersten Stromschiene (58) und ein erster Anschlusskontakt (60a) einer zweiten Stromschiene (60) in einer ersten Steckkontur (48) einsitzen, wobei ein zweiter Anschlusskontakt (58b) der ersten Stromschiene (58) zum Anschluss an einen, insbesondere als Masseanschluss ausgebildeten, ersten Batterieanschluss (10) und ein zweiter Anschlusskontakt (60b) der zweiten Stromschiene (60) zum Anschluss an einen, insbesondere als Phasenanschluss ausgebildeten, zweiten Batterieanschluss (12) vorgesehen ist.

3. Steckervorrichtung (14) nach Anspruch 2,
**dadurch gekennzeichnet,**
**dass** ein erster Anschlusskontakt (62a) einer dritten Stromschiene (62) und ein dritter Anschlusskontakt (58c) der ersten Stromschiene (58) in einer zweiten Steckkontur (50) einsitzen, wobei ein zweiter Anschlusskontakt (62b) der dritten Stromschiene (62) zum Anschluss an den zweiten Batterieanschluss (12) vorgesehen ist.

4. Steckervorrichtung (14) nach einem der vorhergehenden Ansprüche,
**gekennzeichnet durch**
eine dritte Steckkontur (52), welche als ein Bajonettanschluss, insbesondere für eine Druckausgleichsvorrichtung (36), ausgebildet ist.

5. Steckervorrichtung (14) nach einem der vorhergehenden Ansprüche,
**gekennzeichnet durch**
eine vierte Steckkontur (54), welche zur gehäuseinternen und gehäuseaußenseitigen Aufnahme miteinander steckkontaktierbarer Steckerelemente (38a, 38b), umfangsseitig einer Verbindungsöffnung (70) des Anschlussgrundkörpers (46) angeordnet ist.

6. Steckervorrichtung (14) nach einem der vorhergehenden Ansprüche,
**dadurch gekennzeichnet,**
- **dass** diejenigen Stromschienen (58, 64), deren Anschlusskontakte (58b, 64b) zum Anschluss an den ersten Batterieanschluss (10) vorgesehen sind, zu einer ersten Schienengruppe (72) gefügt und gegeneinander elektrisch isoliert sind, und
- **dass** diejenigen Stromschienen (60, 62, 66), deren Anschlusskontakte (60b, 62b, 66b) zum Anschluss an den zweiten Batterieanschluss (12) vorgesehen sind, zu einer zur ersten Schienengruppe (72) separaten zweiten Schienengruppe (74) gefügt und gegeneinander elektrisch isoliert sind.

7. Steckervorrichtung (14) nach einem der vorhergehenden Ansprüche,
**dadurch gekennzeichnet,**
**dass** die Stromschienen (58, 60, 62, 64, 66) formschlüssig und/oder stoffschlüssig im Anschlussgrundkörper (46) aufgenommen sind.

8. Steckervorrichtung (14) nach einem der vorhergehenden Ansprüche,
**dadurch gekennzeichnet,**
**dass** zumindest eine der Steckkonturen (48, 50, 52, 54, 56) gegen eine Normale derjenigen Fläche geneigt ist, an welcher diese Steckkontur (48, 50, 52, 54, 56) angeformt ist.

9. Batterie (4) mit einem Batteriegehäuse (6) und mit einer Steckervorrichtung (14) nach einem der Ansprüche 1 bis 8.

10. Elektrisch angetriebenes Kraftfahrzeug (2) mit einer Batterie (4) nach Anspruch 9.

## Claims

1. Plug device (14) for mounting on a battery housing (6) of a battery (4) of an electrically driven motor vehicle (2),
- with a connection main body (46) with at least two integrally formed plug contours (48, 50, 52, 54, 56), which are each configured for receiving a plug counter-contour (26a, 30a, 34a, 38c, 38d, 42a) of a respectively assigned plug element (26, 30, 34, 38a, 38b, 42),
- with a number of conductor rails (58, 60, 62, 64, 66), which are received in the connection main body (46) and each have at least two connection contacts (58a, 58b, 58c, 60a, 60b, 62a, 62b, 64a, 64b, 66a, 66b), of which in each case one connection contact (58b, 60b, 62b, 64b, 66b) is configured for the housing-internal electrical connection to a battery connection (10, 12) and the respective other terminal contact (58a, 58c, 60a, 62a, 64a, 66a) is seated in one of the plug contours (48, 50, 52, 54, 56) for plug contacting on the outside of the housing with the assigned plug element (26, 30, 34, 38a, 38b, 42) of a high-voltage consumer (28), of a high-voltage secondary consumer (32) or of a charging device (44) for the battery (4), and
- with a sealing element (86) for liquid- and gas-tight sealing of the connection main body (46) to the battery housing (6).

2. Plug device (14) according to claim 1,
**characterized in**
**that** a first connection contact (58a) of a first conductor rail (58) and a first connection contact (60a) of a second conductor rail (60) are seated in a first plug-in contour (48), a second connection contact (58b) of the first conductor rail (58) being configured for connection to a first battery connection (10), in particular in the form of a ground connection, and a second connection contact (60b) of the second conductor rail (60) being configured for connection to a second battery connection (12), in particular in the form of a phase connection.

3. Plug device (14) according to claim 2,
**characterized in**
**that** a first connection contact (62a) of a third conductor rail (62) and a third connection contact (58c) of the first conductor rail (58) are seated in a second plug-in contour (50), a second connection contact (62b) of the third conductor rail (62) being configured for connection to the second battery connection (12).

4. Plug device (14) according to one of the preceding claims,
**characterized by**
a third plug-in contour (52), which is designed as a bayonet connection, in particular for a pressure compensation device (36).

5. Plug device (14) according to one of the preceding claims,
**characterized by**
a fourth plug contour (54), which is arranged on the circumference of a connection opening (70) of the connection main body (46) for the housing-internal and housing-external reception of plug elements (38a, 38b), which can be plugged-contacted to each another.

6. Plug device (14) according to one of the preceding claims,
**characterized in**
- **that** those conductor rails (58, 64) whose terminal contacts (58b, 64b) are configured for connection to the first battery connection (10) are joined to form a first conductor rail group (72) and are electrically insulated from each another, and
- **that** those conductor rails (60, 62, 66) whose terminal contacts (60b, 62b, 66b) are configured for connection to the second battery connection (12) are joined to form a second conductor rail group (74), which is separate from the first conductor rail group (72) and are electrically insulated from each another.

7. Plug device (14) according to one of the preceding claims,
**characterized in**
**that** the conductor rails (58, 60, 62, 64, 66) are received in the connection main body (46) in a form-fitting and/or material-fitting manner.

8. Plug device (14) according to one of the preceding claims,
**characterized in**
**that** at least one of the plug-in contours (48, 50, 52, 54, 56) is inclined with respect to a normal of said surface, to which this plug-in contour (48, 50, 52, 54, 56) is formed.

9. Battery (4) with a battery housing (6) and with a plug device (14) according to one of claims 1 to 8.

10. Electrically powered motor vehicle (2) with a battery (4) according to claim 9.

## Revendications

1. Ensemble connecteur (14) pour le montage sur un boîtier de batterie (6) d'une batterie (4) d'un véhicule automobile à propulsion électrique (2),
- avec un corps de base de connexion (46) avec au moins deux contours d'enfichage (48, 50, 52, 54, 56) formés sur celui-ci, qui sont prévus respectivement pour recevoir un contre-contour de connecteur (26a, 30a, 34a, 38c, 38d, 42a) d'un élément de connecteur (26, 30, 34, 38a, 38b, 42) respectivement associé,
- avec un certain nombre de barres conductrices (58, 60, 62, 64, 66) logées dans le corps de base de connexion (46), qui comprennent chacune au moins deux contacts de connexion (58a, 58b, 58c, 60a, 60b, 62a, 62b, 64a, 64b, 66a, 66b), dont respectivement un contact de connexion (58b, 60b, 62b, 64b, 66b) est prévu pour la connexion électrique interne au boîtier avec une connexion de batterie (10, 12), et l'autre contact de connexion respectif (58a, 58c, 60a, 62a, 64a, 66a) est inséré dans l'un des contours d'enfichage (48, 50, 52, 54, 56) pour la mise en contact enfichable côté extérieur du boîtier avec l'élément de connecteur associé (26, 30, 34, 38a, 38b, 42) d'un consommateur haute tension (28), d'un consommateur auxiliaire haute tension (32) ou d'un dispositif de charge (44) pour la batterie (4), et
- avec un élément d'étanchéité (86) pour assurer l'étanchéité aux liquides et aux gaz du corps de base de connexion (46) sur le boîtier de batterie (6).

2. Ensemble connecteur (14) selon la revendication 1,
**caractérisé en ce**
**qu'**un premier contact de connexion (58a) d'une première barre conductrice (58) et un premier contact de connexion (60a) d'une deuxième barre conductrice (60) sont logés dans un premier contour d'enfichage (48), un deuxième contact de connexion (58b) de la première barre conductrice (58) étant prévu pour la connexion à une première borne de batterie (10), configurée en particulier comme borne de masse, et un deuxième contact de connexion (60b) de la deuxième barre conductrice (60) étant prévu pour la connexion à une deuxième connexion de batterie (12), configurée en particulier comme connexion de phase.

3. Ensemble connecteur (14) selon la revendication 2,
**caractérisé en ce**
**qu'**un premier contact de connexion (62a) d'une troisième barre conductrice (62) et un troisième contact de connexion (58c) de la première barre conductrice (58) sont logés dans un deuxième contour d'enfichage (50), un deuxième contact de connexion (62b) de la troisième barre conductrice (62) étant prévu pour la connexion à la deuxième connexion de batterie (12).

4. Ensemble connecteur (14) selon l'une des revendications précédentes,
**caractérisé par**
un troisième contour d'enfichage (52), qui est conçu comme un raccord à baïonnette, en particulier pour un dispositif d'équilibrage de pression (36).

5. Ensemble connecteur (14) selon l'une des revendications précédentes,
**caractérisé par**
un quatrième contour de fiche (54), qui est disposé sur la circonférence d'une ouverture de liaison (70) du corps de base de connexion (46) pour la réception interne au boîtier et externe au boîtier d'éléments de connecteur (38a, 38b), qui peuvent être mis en contact par enfichage l'un avec l'autre.

6. Ensemble connecteur (14) selon l'une des revendications précédentes,
**caractérisé en ce**
- **que** les barres conductrices (58, 64) dont les contacts de connexion (58b, 64b) sont prévus pour la connexion à la première connexion de batterie (10) sont assemblées en un premier groupe de barres (72) et isolées électriquement les unes des autres, et
- **que** les barres conductrices (60, 62, 66) dont les contacts de connexion (60b, 62b, 66b) sont prévus pour la connexion à la deuxième connexion de batterie (12) sont assemblées en un deuxième groupe de barres (74) séparé du premier groupe de barres (72) et isolées électriquement les unes des autres.

7. Ensemble connecteur (14) selon l'une des revendications précédentes,
**caractérisé en ce**
**que** les barres conductrices (58, 60, 62, 64, 66) sont logées dans le corps de base de connexion (46) par complémentarité de forme et/ou de matière.

8. Ensemble connecteur (14) selon l'une des revendications précédentes,
**caractérisé en ce**
**qu'**au moins l'un des contours d'enfichage (48, 50, 52, 54, 56) est incliné par rapport à une normale de la surface, sur laquelle ledit contour d'enfichage (48, 50, 52, 54, 56) est formé.

9. Batterie (4) comprenant un boîtier de batterie (6) et comprenant un ensemble connecteur (14) selon l'une des revendications 1 à 8.

10. Véhicule automobile à propulsion électrique (2) avec d'une batterie (4) selon la revendication 9.
